(19) Europäisches Patentamt / European Patent Office / Office européen des brevets

(11) **EP 4 726 441 A1**

(12) **EUROPEAN PATENT APPLICATION**

(43) Date of publication:
**15.04.2026  Bulletin 2026/16**

(21) Application number: **24205420.3**

(22) Date of filing: **08.10.2024**

(51) International Patent Classification (IPC):
**G02B 3/14** *(2006.01)*    **G02B 25/00** *(2006.01)*

(52) Cooperative Patent Classification (CPC):
**G02B 3/14;** G02B 25/005

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Decurnex, Nathan**
**1291 Commugny VD (CH)**

(72) Inventor: **Decurnex, Nathan**
**1291 Commugny VD (CH)**

(74) Representative: **Odoom, Ernest et al**
**Ernie's Attorneys**
**Rue du Léman 9**
**1201 Geneva (CH)**

(54) **A WATCHMAKER S MONOCULAR MAGNIFIER WITH ADJUSTABLE MAGNIFICATION**

(57)    The present document discloses a watchmaker's monocular magnifier having adjustable magnification. The magnifier is light, compact and ergonomic and comprises a manually adjustable focus-tunable liquid lens in contact with a fixed focus lens and can provide magnifications variable between about 3x and about 12x.

Figure 1

**Description**

**TECHNICAL DOMAIN**

The concepts described herein relate generally to the field of optical devices or systems for magnifying an object, especially for close-up observation of the object. More particularly, the present description relates to portable monocular optical magnifying devices of the type commonly used by watchmakers or jewellers, which are generally worn, or held, close to the user's eye and where the observed object is usually at most 25cm or so from the user's head, typically around 10cm or even less.

**BACKGROUND**

Portable optical magnification devices, also known as micros, are widely used by jewelers and watchmakers to observe and manipulate parts of a mechanism or of an object, where said parts are of a dimension which makes them difficult to be observed with the naked eye. Other terms in use for such devices include jeweler's loupe, a watchmaker's loupe, an eye loupe, or a watchmaker's ocular. An eyeglass magnifier is a watchmaker's magnifier adapted to attach to eyeglasses. All of these watchmaker's magnifiers are generally light in weight and small in size to allow them to be worn by the user, lodged between the lower part of their brow bone and the upper part of their cheek bone. Alternatively, there also exists eye loupe holders, which includes an adjustable wire ring which holds the magnifier at one end, with the other end looping around the user's head in order to hold the magnifier close to the user's eye. Some watchmaker's magnifiers are designed to be attached to the user's own spectacles. As such, watchmaker's magnifiers have to be compact and ergonomic, as the user may wear the device for several hours at a time while working. It must also be easy for the user to remove and replace the device during work.

Depending on the type of work the user is doing, they made need different levels of magnification. In order to meet this need, the user generally has to have a range of magnifiers of different magnifications, as the magnification of most known watchmaker's magnifiers is fixed. Watchmakers usually require a set of different magnifiers ranging from around 2x through to say 12x, or even more. It is therefore a goal of the present invention to provide a single watchmaker's magnifier which will provide the user with an adequate range of different magnifications for accomplishing the tasks generally required of a watchmaker or a jeweler.

Zoom lenses are known in the art for providing a view of an object at variable magnification and/or for adjusting focus. A zoom lens usually comprises a system of lenses whose positions relative to each other may be altered to achieve a desired magnification. This approach is used for example in a zoom magnifier disclosed in United States patent publication number US6124985, in which there is comprised a positive first lens group, a negative second lens group and a positive third lens group, placed in the recited order from the eye side. The magnification level of the zoom magnifier can be varied by performing a zooming manipulation whereby the second lens group is moved along the optical axis. Similarly, United States patent publication number US11640051B1 discloses a pair of motorised binocular loupes, to provide automated modification of the magnification of the object by controlling motors to move lenses along the optical axes of the barrels of the binocular loupes.

European patent application publication number EP4170411A1 describes a monocular watchmaker's loupe having a first lens at a first extremity and a second lens within the loupe, which can be flipped between two different positions: a first position where the second lens is stowed in a way that it remains outside of the optical axis; and a second position where the second lens is presented in the optical axis. In the first position, the magnification level provided by the loupe corresponds to the magnification of the first lens. In the second position, the magnification level provided by the loupe is a result of a combination of the magnifications of the first and second lenses. According to an embodiment described therein, the loupe provides a magnification of 2.5x in the first position and 15x in the second position. According to another embodiment, the loupe may comprise a third lens which may be flipped between two positions in a similar manner to the second lens, thus providing a loupe which is configured to be switchable between four different magnification levels.

European patent application publication number EP4060395A1 discloses a monocular watchmaker's loupe having an electronic image capture device for capturing images seen by the user through the loupe. The images can then be projected onto a display. Using image processing means, the image of an object seen through the loupe may be projected at variable levels of magnification.

United States patent application publication number US20230138560A1 discloses an electronic watchmaker magnifier having a magnifying objective lens for observing an object, communication means to receive data, a display screen to display the data and a beam splitter to allow for the user to simultaneously see at least one image of the object coming from the objective lens and at least one image from the display screen. A goal of the magnifier disclosed therein is to allow the user to visually access data related to the object under observation at the same time as they are observing the object so that they may remain focussed on the object under observation while also being able to consult the related data. Where the related data is a set of instructions for how to work on the object under observation, for example, this prevents the user from having to remove their gaze from the object while consulting the related data, which would be the case should the user have to look at a book to find the related data.

A variable magnification optical loupe assembly is disclosed in United States patent application publication number US20140218646A1. In one embodiment, the variable magnification is provided by having an electromechanical zoom apparatus to vary the distance between different lens elements within the system, similar to the zoom mechanisms described above. In another embodiment, variable magnification is provided by a liquid lens assembly, whose refractive index may be varied by applying appropriate electrical signals to the liquid lens assembly unit. The disclosure teaches how to use electrically controllable liquid lens modules to achieve variable magnification in a watchmaker's magnifier. Electrically controllable liquid lens modules which have magnetic parts may be less suitable for use in watchmakers' magnifiers where it is generally preferred to avoid using tools which have magnetic properties. Mechanically adjustable liquid lens modules are also available in the art, however the level of magnification achievable by such liquid lens module is not suitable for use in a watchmaker's magnifier having variable magnification from between 2x to 15x. Rather, their use has been shown in the domain of corrective spectacles, where the level of magnification required is more in the order of 1.5x and certainly nowhere near as high as 2x.

**BRIEF SUMMARY OF THE INVENTION**

Given the state of the art, there is a need to provide a watchmaker's magnifier whose magnification may be adjusted to provide various different levels of magnification ranging from somewhere around 2x magnification to somewhere around 15x magnification.

According to a first aspect, there is disclosed herein a portable optical device comprising:

> a substantially hollow body around an optical axis, the body having a first end and a second end; and
> a focus-tunable liquid lens for magnifying an object located towards the second end of the body as observed by a user at the first end of the body through the optical device, said focus-tunable liquid lens being housed within the body along said optical axis; characterised in that:
>
>> said focus-tunable liquid lens is a manually adjustable focus-tunable liquid lens; and
>> the device further comprises a fixed focus lens housed within the body along the optical axis and located at a first face or at a second face of the focus-tunable liquid lens.

According to a particular embodiment, the focus-tunable liquid lens has an optical power which can be adjusted manually from around -18 dioptres through to +18 dioptres and a fixed focus lens having a focal length of around 4cm, thus forming a magnifier having variable magnification from around 3x to 12x, which is a very large range for a watchmaker's magnifier and which is entirely compatible with the needs of the industry. Other manually adjustable focus-tunable liquid lenses having different optical power ranges may be used, for example from -20x to +20x, in combination with a fixed focal length of suitable power to extend the range of magnification of the watchmaker's magnifier as required.

According to an embodiment, the manually focus-tunable liquid lens has a minimum optical power of around -18 dioptres and a maximum optical power of around +18 dioptres. In such an embodiment, it may be arranged for the fixed focus lens to have a focal length of around 4cm, giving a watchmaker's variable magnification magnifier with magnification which can vary from about 3x to about 12x. Other embodiments with different magnification ranges are possible by choosing manually focus-tunable lenses and corresponding fixed focus lenses of suitable optical powers.

**BRIEF DESCRIPTION OF THE DRAWING**

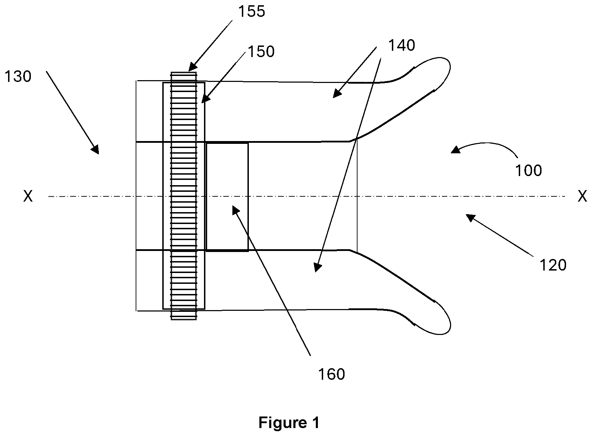

The concepts described herein will be better understood thanks to the detailed description which follows, along with the accompanying drawing, Figure 1, in which a schematic representation of a watchmaker's magnifier according to an embodiment described herein is illustrated.

**DETAILED DESCRIPTION**

A goal of the present disclosure is to provide a monocular watchmaker's magnifier which is adjustable to provide a wide range of magnification levels, preferably ranging from somewhere near 2x to somewhere near 15x.

A watchmaker's magnifier comprises at least one lens. The optical power ($\Phi$) of the lens may be expressed in dioptres (dpt), a measurement having a dimension of reciprocal length. The optical power is the inverse of the focal length of the lens, and it expresses the amount by which the lens is able to bend light, and in which direction: lenses having positive optical power cause light to converge at a focal point behind the lens (on the side of the refracted light), while lenses having negative optical power cause light to diverge, implying a virtual focal point in front of the lens (on the side of the incident light). In the optics domain, the term magnifying power is often used to characterise a magnifier. Sometimes this is called the total power of the magnifier. The magnifying power is different from the optical power. The magnifying power may be obtained using the following equation:

$MP_0 = 0.25m \times \Phi m^{-1} + 1$, where $\Phi$ is the optical power of the lens and the factor of 0.25m is the assumed near point of accommodation which is generally agreed for characterising magnifiers.

With the assumed near point of accommodation having a dimension of length and the optical power having a dimension of reciprocal length, the value calculated as the magnifying power in the equation above, $MP_0$, is dimensionless. The magnifying power of the lens is said to be mx, or xm. For example, the magnifying power of a magnifier having a lens whose focal length is 5cm is 6 because a 5cm focal length lens has an optical power of 20 dioptres and $MP_0 = 20 \times 0.25 + 1$. Such a magnifier would be sold as being a 6x magnifier or a x6 magnifier.

The equation given above describes the magnifying power of a lens when it is held close to the user's eye, with the object under observation being brought into focus by moving the lens and the eye together towards the object or away from the object until a position of optimum focus is reached. However, this is not the only way to use a magnifying lens: sometimes it is more convenient, or more comfortable, for the user to put the lens close to the object, for example one focal length way, and to move the eye to some larger distance away. This provides for a good image to be obtained very easily, with the focus being relatively insensitive to the exact position of the eye. In this case, the equation which is generally used to calculate the magnifying power as follows:

$$MP_0 = 0.25m \times \Phi m^{-1}$$

A typical magnifying glass having a focal length of 25cm, corresponding to an optical power of 4 dioptres, would be sold as a 2x magnifier based on the formula for $MP_0$ given above. In actual use, a user with "typical" eyes, when using such a magnifier, would obtain a magnifying power of between 1 and 2, depending on where the lens is held.

Focus-tunable lenses are known in the art, offering substantially continuous focusing capacity over a specified focal range. This type of lens allows the user to custom tune the lenses for optimum performance. Liquid lenses are focus-tunable and they have been used in the prior art to provide for variable magnification in an optical loupe, as described above. These liquid lenses are controlled electrically to vary their optical power. As mentioned previously, manually focus-tunable lenses also exist, where their curvature can be manually changed from plano-convex through to plano-concave by rotating a ring attached to an outer diameter of the lens, but these were found to be unsuitable for use in a watchmaker's magnifier. One such example of a known manually focus-tunable liquid lens has a rotatable outer ring, which can be used to vary the focal length of the lens. For example, one such lens has a manually adjustable focal length which can vary between about -5.5mm through to about 5.5mm, which represents an optical power tuning range of -18 dioptres to +18 dioptres, i.e. a range of 36 dioptres. These lenses have an aperture of about 2cm, an external diameter of about 3.8cm, a thickness of just over a centimetre and a weight of about 15g or so, making them at first appear to be an ideal candidate for use in a watchmaker's magnifier with variable magnification because it would be difficult for other types of lens arrangements to provide such a wide optical power tuning range for such a compact form factor and weight. However, the range of -18 to +18 dioptres is totally incompatible with the useable range for accomplishing the tasks required in the domain of watchmaking and so such a lens would normally not be suitable for making a variable magnification watchmaker's magnifier.

Figure 1 shows a schematic representation of a variable magnification watchmaker's magnifier **100** according to an embodiment of the present invention. The magnifier **100** has a generally hollow body **140** around an optical axis **X-X**. According to an embodiment, a first end **120** of the magnifier is adapted to be held between the brow bone and cheek bone of the user, with the second end **130** pointing towards the object to be observed. The magnifier comprises a manually adjustable focus-tunable liquid lens **150,** preferably a liquid lens, having an outer ring **155** which may be rotated by the user to alter the focal length of the focus-tunable lens. The focus-tunable lens **150** may be located within the body **140** of the magnifier **100** and in the optical axis such that light from an object at the second end **130** of the magnifier **100** passes through the lens **150** towards the first end **120** of the magnifier **100.** According to one embodiment, the outer ring **155** of the focus-tunable lens **150** may be rotated manually by the user. According to another embodiment, the outer ring **155** may be rotated under the control of an electrical motor.

As mentioned above, simply having the manually adjustable focus-tunable lens would provide an optical power tuning range of -18 dioptres to +18 dioptres, which is incompatible with the requirements of a watchmaker's magnifier. According to an embodiment of the invention, the magnifier **100** further comprises a fixed focus lens **160** located within the body of the magnifier close to the focus-tunable lens **150,** preferably in contact with the focus-tunable lens **150.** In a preferred embodiment, the fixed focus lens **160** is attached to the focus-tunable lens **150.**

The selection of the focal length of the fixed focus lens may be chosen to satisfy the condition whereby the magnifier would provide a range of magnification levels which is suitable for the magnifier to be used to adequately perform tasks expected of a watchmaker, for example. A magnification spanning somewhere between around 2x to about 15x is generally accepted as being sufficient for a magnifier to be used by a watchmaker.

A magnification of 2x corresponds to an optical power of the focus-tunable and fixed focus lens combination to be 4 dioptres, while a magnification of 15x corresponds to an optical power of around 56 dioptres. In embodiments according to the present invention, the optical power of the fixed focus lens is selected such that the optical power of the magnifier, resulting from the combination of optical powers of the focus-tunable lens and the fixed focus lens system provides an optical power having a range somewhere within 2x to 15x.

According to a preferred embodiment, the focal length of the fixed focus lens **160** is chosen to be 4cm. This corresponds to an optical power of 25 dioptres. When the focus-tunable lens is set to have an optical power of -18 dioptres, the lens system comprising the combination of the focus-tunable lens and the fixed focus lens provides an optical power of 7 dioptres, which is the sum of the -18 dioptres provided by the focus-tunable lens and the 25 dioptres provided by the fixed focus lens. Conversely, when the focus-tunable lens is set to have an optical power of +18 dioptres, the lens system comprising the combination of the liquid lens and the fixed focus lens then gives an optical power for the magnifier of 43 dioptres, the sum of 18 dioptres and 25 dioptres. Consequently, the embodiment described above results in a variable magnification magnifier having a form factor, size and weight suitable for use by a watchmaker, whose magnification may be varied from 7 dioptres through 43 dioptres by the user simply rotating the outer ring of the focus-tunable lens of the magnifier. According to an embodiment, the optical power of the focus-tunable lens may vary by 0.12 dioptres per degree of rotation of the outer ring.

The range of 7 dioptres to 43 dioptres is within the 4 dioptre to 56 dioptre range which would provide a magnifier with variable magnification from 2x through 15x and so a magnifier according to the embodiment is entirely suitable for use as a variable magnification watchmaker's magnifier. Other embodiments are possible with different optical power ranges being selected for the manually focus-tunable liquid lens **150** and different focal lengths being selected for the corresponding fixed focus lens **160,** as long as the combination of the lenses in the system provides a range of magnifications which is suitable for the device to be used as a watchmaker's magnifier.

According to an embodiment, the first end of the magnifier need not be adapted to allow the magnifier to be worn by the user, but rather the magnifier may be adapted to be held near the user's eye using a watchmaker's eye loupe holder, which is a flexible wire support which holds the magnifier at one end, near the user's eye, and loops around part of the user's head at the other end. According to another embodiment, the body of the magnifier may be configured to allow the magnifier to be attached to a pair of glasses, or a monocle, to be worn by the user. The glasses may have clear glass or prescription lenses adapted to compensate for an eyesight defect of an individual user.

**Claims**

1. A portable optical device (100) comprising:

   a substantially hollow body (140) around an optical axis (X-X), the body having a first end (120) and a second end (130); and
   a focus-tunable liquid lens (150) for magnifying an object located towards the second end (130) of the body (140) as observed by a user at the first end (120) of the body (140) through the optical device (100), said focus-tunable liquid lens (150) being housed within the body (140) along said optical axis (X-X);
   **characterised in that**:

      said focus-tunable liquid lens (150) is a manually adjustable focus-tunable liquid lens; and
      the device (100) further comprises a fixed focus lens (160) housed within the body (140) along the optical axis (X-X) and located at a first face or at a second face of the focus-tunable liquid lens (150).

2. The optical device (100) according to claim 1, wherein said focus-tunable liquid lens (150) and fixed focus lens (160) are in physical contact with each other.

3. The optical device (100) according to either of claims 1 or 2, wherein the focus-tunable liquid lens (150) and fixed focus lens (160) are attached to each other.

4. The optical device (100) according to any of the preceding claims, wherein the device (100) is a watchmaker's monocular magnifier configured to be held near the user's eye or held or worn by the user at the user's eye.

5. The optical device (100) according to any of the preceding claims, wherein said focus-tunable liquid lens (150) has a given curvature and comprises an outer ring (155) configured to be rotated by the user to alter said curvature thus varying the optical power of the focus-tunable liquid lens (150).

6. The optical device (100) according to any of the preceding claims, wherein the system of lenses comprising the focus-tunable liquid lens (150) and the fixed focus lens (160) provides the device (100) with a magnifying power which can be adjusted from about 7 dioptres when the focus-tunable liquid lens (150) is set to its minimum optical power through to around at least 43 dioptres when the focus-tunable liquid lens (150) is set to its maximum optical power.

7. The optical device (100) according to any of the preceding claims, the focus-tunable liquid lens (150) being configured such that its outer ring (155) may be rotated manually by the user.

8. The optical device (100) according to any of claims 1 through 6, configured such that the outer ring (155) of the focus tunable lens (150) may be rotated under the control of an electrical motor.

9. The optical device (100) according to any of the preceding claims, wherein the body (140) is configured to allow the first end (120) of the device (100) to be worn at the eye socket of the user.

10. The optical device (100) according to any of the preceding claims, configured such that the device (100) may be held near the eye of the user using a wire support for a watchmaker's magnifier.

11. The optical device (100) according to any of the preceding claims, configured to be attached to a monocle or to a pair of glasses.

Figure 1

Europäisches
Patentamt

European
Patent Office

Office européen
des brevets

# EUROPEAN SEARCH REPORT

**Application Number**

EP 24 20 5420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/208195 A1 (GUPTA AMITAVA [US] ET AL) 19 August 2010 (2010-08-19)<br>* paragraphs [0039], [0053], [0067]; figures 2, 4A, 1A, 3A * | 1-11 | INV.<br>G02B3/14<br>G02B25/00 |
| | ----- | | |
| X | US 2012/140322 A1 (SCHNELL URBAN [CH] ET AL) 7 June 2012 (2012-06-07)<br>* paragraph [0022]; figures 4, 2, 1 * | 1,4,6,<br>9-11 | |
| | ----- | | |
| X | US 2015/378067 A1 (STEVENS ROBERT [GB] ET AL) 31 December 2015 (2015-12-31)<br>* paragraphs [0069], [0066]; figures 6, 4 * | 1 | |
| | ----- | | |

**TECHNICAL FIELDS SEARCHED (IPC)**

G02B
G02C

The present search report has been drawn up for all claims

| Place of search | Date of completion of the search | Examiner |
|---|---|---|
| Munich | 14 February 2025 | Jones, Julian |

EPO FORM 1503 03.82 (P04C01)

# EP 4 726 441 A1

## ANNEX TO THE EUROPEAN SEARCH REPORT
## ON EUROPEAN PATENT APPLICATION NO.

EP 24 20 5420

14-02-2025

| Patent document cited in search report | Publication date | Patent family member(s) | Publication date |
|---|---|---|---|
| US 2010208195 A1 | 19-08-2010 | AR 075420 A1 | 30-03-2011 |
| | | BR PI1008632 A2 | 01-03-2016 |
| | | CA 2752531 A1 | 19-08-2010 |
| | | CN 102317816 A | 11-01-2012 |
| | | CN 105974499 A | 28-09-2016 |
| | | EP 2396684 A1 | 21-12-2011 |
| | | IL 214464 A | 31-05-2016 |
| | | IL 245375 A | 31-01-2017 |
| | | JP 2012518198 A | 09-08-2012 |
| | | JP 2016033682 A | 10-03-2016 |
| | | JP 2018072853 A | 10-05-2018 |
| | | JP 2019174820 A | 10-10-2019 |
| | | RU 2011136974 A | 20-03-2013 |
| | | US 2010208195 A1 | 19-08-2010 |
| | | US 2012192991 A1 | 02-08-2012 |
| | | WO 2010093754 A1 | 19-08-2010 |
| | | ZA 201105870 B | 28-11-2012 |
| US 2012140322 A1 | 07-06-2012 | AR 084071 A1 | 17-04-2013 |
| | | AU 2011336538 A1 | 13-06-2013 |
| | | BR 112013013506 A2 | 06-09-2016 |
| | | CA 2819505 A1 | 07-06-2012 |
| | | CN 103380387 A | 30-10-2013 |
| | | EP 2646859 A1 | 09-10-2013 |
| | | IL 226620 A | 31-10-2017 |
| | | JP 6053035 B2 | 27-12-2016 |
| | | JP 2014506335 A | 13-03-2014 |
| | | KR 20130120494 A | 04-11-2013 |
| | | RU 2013126207 A | 10-01-2015 |
| | | SG 190889 A1 | 31-07-2013 |
| | | SG 10201509872U A | 26-02-2016 |
| | | US 2012140322 A1 | 07-06-2012 |
| | | WO 2012075218 A1 | 07-06-2012 |
| | | ZA 201303879 B | 30-07-2014 |
| US 2015378067 A1 | 31-12-2015 | BR 112015018309 A2 | 18-07-2017 |
| | | CN 105143926 A | 09-12-2015 |
| | | EP 2951622 A1 | 09-12-2015 |
| | | JP 6379111 B2 | 22-08-2018 |
| | | JP 6773286 B2 | 21-10-2020 |
| | | JP 2016510430 A | 07-04-2016 |
| | | JP 2018136555 A | 30-08-2018 |
| | | RU 2015136654 A | 06-03-2017 |
| | | US 2015378067 A1 | 31-12-2015 |
| | | US 2018100954 A1 | 12-04-2018 |
| | | WO 2014118546 A1 | 07-08-2014 |

EPO FORM P0459

page 1 of 2

## ANNEX TO THE EUROPEAN SEARCH REPORT
## ON EUROPEAN PATENT APPLICATION NO.

EP 24 20 5420

This annex lists the patent family members relating to the patent documents cited in  the above-mentioned European search report.
The members are as contained in the European Patent Office EDP file on
The European Patent Office is in no way liable for these particulars which are merely given for the purpose of information.

14-02-2025

| Patent document cited in search report | Publication date | Patent family member(s) | Publication date |
|---|---|---|---|

For more details about this annex : see Official Journal of the European Patent Office, No. 12/82

EPO FORM P0459

## REFERENCES CITED IN THE DESCRIPTION

**Patent documents cited in the description**

- US 6124985 A
- US 11640051 B1
- EP 4170411 A1

- EP 4060395 A1
- US 20230138560 A1
- US 20140218646 A1